# EUROPEAN PATENT SPECIFICATION

(11) **EP 3 416 533 B1**
(45) Date of publication and mention of the grant of the patent: **01.01.2020**
(21) Application number: 17707393.9
(22) Date of filing: 14.02.2017
(51) Int. Cl.: A47J 37/12

(54) **RECEPTACLE FOR SPENT COOKING OIL OR FAT**
BEHÄLTER FÜR GEBRAUCHTES SPEISEÖL ODER -FETT
RÉCEPTACLE POUR HUILE OU GRAISSE DE CUISSON USAGÉE

(30) Priority: 18.02.2016 GB 201602988
(43) Date of publication of application: 26.12.2018
(73) Proprietor: Evans, Jacqueline, Farnborough Hampshire GU14 9JT (GB); Bruce, Richard, Farnborough, Hampshire GU14 0PL (GB)
(72) Inventor: Evans, Jacqueline, Farnborough Hampshire GU14 9JT (GB); Bruce, Richard, Farnborough, Hampshire GU14 0PL (GB)
(74) Representative: Openshaw & Co.
(86) International application number: PCT/GB2017/050384
(87) International publication number: WO 2017/141021

(56) References cited:
- US-A- 3 487 439
- US-A- 5 845 769
- US-A- 5 885 262
- US-B1- 8 777 001

## Description

### FIELD OF THE INVENTION

The present invention relates to receptacles for disposing spent cooking oil or fat.

### BACKGROUND

Increasing awareness of correct disposal practices means that disposal in sewage systems of fats and oils is discouraged. Spillages of fats and oils can be difficult to clean up.

US 8 777 001 B1 describes a leak-tight/water-proof transformer containment bag including an outer puncture-resistant liquid-barrier fabric bag with a bottom having an oil-absorbent cushioning mat; a middle tear-resistant liquid-impervious continuous sheet bag liner secured inside the outer bag; and an inner puncture-resistant liquid-barrier fabric bag secured inside the liner.

### SUMMARY OF THE INVENTION

The present invention relates to a receptacle for spent cooking oil or fat according to independent claim 1 and to a method of providing a receptacle according to independent claim 13. The receptacle comprises a base portion and a side wall coupled to the base portion at a boundary between the base portion and the side wall. The base portion comprises a liquid absorbent layer for absorbing spent cooking oil or fat, and a liquid impermeable layer. The liquid absorbent layer is disposed on the liquid impermeable layer. A stiffness of the receptacle at the boundary between the base portion and the side wall is less than a stiffness of at least part of the side wall remote from the boundary. The receptacle may be disposable or single-use.

According to the invention the stiffness of the receptacle at the boundary between the base portion and the side wall may be less than a stiffness of at least part of the base portion remote from the boundary.

The side wall may surround the base portion.
The side wall may extend from the base portion, such that the side wall is non-parallel with the base portion, e.g. the side wall may extend upwardly from the base portion.

The receptacle may be changeable between a first configuration and a second configuration. In the first configuration, the liquid impermeable layer may define at least part of an exterior surface of the receptacle. In the second configuration, the liquid impermeable layer may define at least part of an interior surface of the receptacle. In the first configuration, the side wall may extend from the base portion in a first direction. In the second configuration, the side wall may extend from the base portion in a second direction, the second direction being opposite to the first direction.

The side wall may be coupled to the base portion at a first end of the side wall. A second end of the side wall opposite to the first end of the side wall may define an opening of the receptacle. The receptacle may further comprise an elastic material surrounding at least part of the opening. The elastic material may be arranged to exert a force on the side wall acting to reduce a diameter of the opening.

The receptacle may further comprise a first fastening means at or proximate to the opening. The first fastening means may pass through an entirety of the thickness of the receptacle at the boundary. The first fastening means may be arranged to force opposite sides of the receptacle towards each other. The first fastening means may comprise a fastening means selected from the group of fastening means consisting of a thread or yarn arranged as a line of stitches, and one or more staples. The first fastening means may comprise an elastic material surrounding at least part of the opening.

The receptacle may further comprise means for at least partially closing the opening. The means for at least partially closing the opening may comprise closing means selected from the group of closing means consisting of: a drawstring surrounding the opening, sealing tapes, and Velcro™. The means for at least partially closing the opening may be the first fastening means.

A thickness of the receptacle at the boundary between the base portion and the side wall may be less than a thickness of at least part of the side wall remote from the boundary and/or the boundary remote from the boundary.

The receptacle may further comprise a second fastening means at or proximate to the boundary. The second fastening means may pass through an entirety of a thickness of the receptacle at the boundary. The second fastening means may be arranged to force opposite sides of the receptacle towards each other. The second fastening means may comprise a fastening means selected from the group of fastening means consisting of a thread or yarn arranged as a line of stitches, and one or more staples.

The side wall may comprise a further liquid impermeable layer. The side wall may comprise the liquid absorbent layer, and the liquid impermeable layer disposed on the liquid absorbent layer. The side wall may further comprises a liquid permeable layer. The liquid permeable layer may be disposed on the liquid absorbent layer of the side wall such that the liquid absorbent layer of the side wall is sandwiched between the liquid impermeable layer of the side wall and the liquid permeable layer of the side wall.

The base portion may further comprise a liquid permeable layer. The liquid permeable layer of the base portion may be disposed on the liquid absorbent layer of the base portion such that the liquid absorbent layer of the base portion is sandwiched between the liquid impermeable layer of the base portion and the liquid permeable layer of the base portion. The liquid permeable layer may be configured to allow the flow of liquid therethrough only in a direction towards the liquid absorbent layer and not in a direction away from the liquid absorbent layer, i.e. be unidirectionally permeable. The liquid permeable layer may comprise polypropylene fabric.

The liquid absorbent layer may be absorbent to liquid fats and other liquids. The liquid absorbent layer may be absorbent of hydrophilic or water-based fluids. The liquid absorbent layer may comprise a material selected from the group of materials consisting of: wood pulp, a super absorbent polymer, granules of acrylic acid polymer salts, oil absorbing beads, electrospun cellulose acetate nanofibers, sodium poly-acrylate, and natural polymers. The liquid impermeable layer may comprise polythene fabric. The receptacle may comprise (e.g. embedded in the liquid absorbent layer) an agent selected from the group of agents consisting of: a deodorising agent, an agent for breaking down fats, and an anti-bacterial agent.

The receptacle may be substantially cylindrical in shape. A diameter of the receptacle may be between 10cm and 20cm. A height of the receptacle may be between 2.5cm and 6cm. The base portion may be substantially flat.

In a further aspect, the present invention provides a receptacle for spent cooking oil or fat. The receptacle comprises a base portion and a side wall coupled to the base portion at a boundary between the base portion and the side wall. The base portion comprises a liquid absorbent layer for absorbing spent cooking oil or fat, and a liquid impermeable layer. The liquid absorbent layer is disposed on the liquid impermeable layer. A stiffness of the receptacle at the boundary between the base portion and the side wall is less than a stiffness of at least part of the base portion remote from the boundary.

In a further aspect, the present invention provides a method of providing a receptacle for spent cooking oil or fat. The method comprises providing a base portion, and coupling a side wall to the base portion at a boundary between the base portion and the side wall. The base portion comprises a liquid absorbent layer for absorbing spent cooking oil or fat, and a liquid impermeable layer. The liquid absorbent layer is disposed on the liquid impermeable layer. A stiffness of the receptacle at the boundary between the base portion and the side wall is less than a stiffness of at least part of the base portion remote from the boundary and/or at least part of the side wall remote from the boundary.

The side wall may be coupled to the base portion at a first end of the side wall. A second end of the side wall opposite to the first end of the side wall may define an opening of the receptacle. The method may further comprise moving the base portion through the opening of the receptacle, thereby changing the receptacle from a first configuration to a second configuration or vice versa. In the first configuration, the side wall extends from the base portion in a first direction. In the second configuration, the side wall extends from the base portion in a second direction, the second direction being substantially opposite to the first direction.

In a further aspect, the present invention provides a cleaning device comprising a body and a cover, wherein the body is arranged to receive hydrophilic fluids such as oil or fat, and the cover is substantially impermeable. The cover may be arranged to be moveable from a first open position substantially presenting the body to a second closed position substantially enclosing the body. The cover may provide an open face and a closed face to the body. The body may comprise plural layers. A layer may have unidirectional permeability. The cleaning device may comprise a handle. The cover and the body may be bonded together. The cover and the body may be bonded together at one or more sides. The side or sides may extend over the body. The side or sides may extend over the body only when the device is in a closed position. The side or sides may comprise elasticity.

### BRIEF DESCRIPTION OF THE DRAWINGS

Figure 1 is schematic illustration (not to scale) showing a perspective view of a receptacle in a first configuration;
Figure 2 is schematic illustration (not to scale) showing a cross-section through the receptacle shown in Figure 1;
Figure 3 is a schematic illustration (not to scale) illustrating a first example use of the receptacle;
Figure 4 is a schematic illustration (not to scale) illustrating a second example use of the receptacle;
Figure 5 is schematic illustration (not to scale) showing a perspective view of the receptacle in a second configuration;
Figure 6 is schematic illustration (not to scale) showing a cross-section through the receptacle shown in Figure 5; and
Figure 7 is a schematic illustration (not to scale) illustrating a third example use of the receptacle.

### DETAILED DESCRIPTION

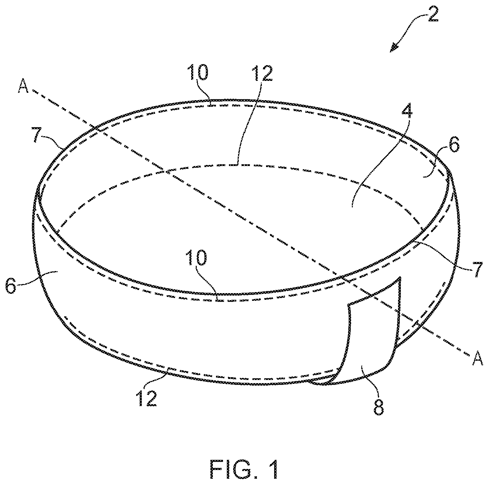

Figure 1 is schematic illustration (not to scale) showing a perspective view of a receptacle 2 for used or spent cooking oil or fat.

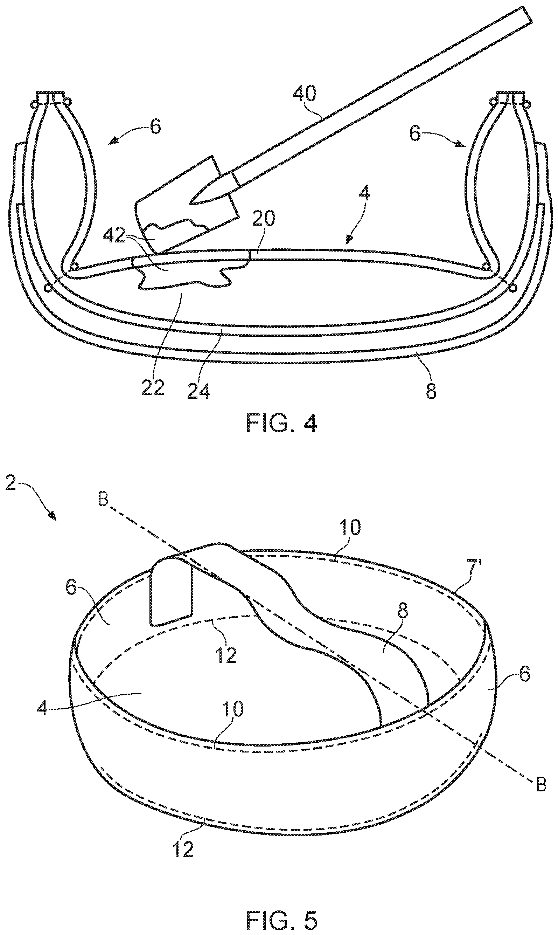

The receptacle 2 is operable to be changed between a first configuration and a second configuration. Figure 1 shows the receptacle 2 in its first configuration. The second configuration of the receptacle 2 will be described in more detail later below with reference to Figures 5 to 7.

In this embodiment, the receptacle 2 comprises a base portion 4, a side wall 6, a handle 8, a first line of stitches 10, and a second line of stitches 12.

The receptacle 2 is generally cylindrical in shape. The base portion 4 is substantially circular. The base portion 4 defines a closed end of the generally cylindrical receptacle 2.

The side wall 6 comprises a first end and a second end opposite to the first end. The side wall 6 is coupled to an edge of the base portion 4 at the first end of the side wall 6. The side wall 6 extends upwardly from its first end at the edge of the base portion 4, to its second end. The second end of the side wall 6 defines an opening 7 to a receptacle interior. The receptacle interior is defined by the base portion 4 and the side wall 6.

The diameter of the receptacle 2 at the base portion 4 is between 10cm and 20cm, e.g. 12cm, 13cm, 14cm, or 15cm.

The diameter of the receptacle 2 at the opening 7 is between 10cm and 20cm, e.g. 12cm, 13cm, 14cm, or 15cm.

The height of the receptacle 2 is between 2.5cm and 6cm, e.g. 2.5cm, 3cm, or 3.5cm.

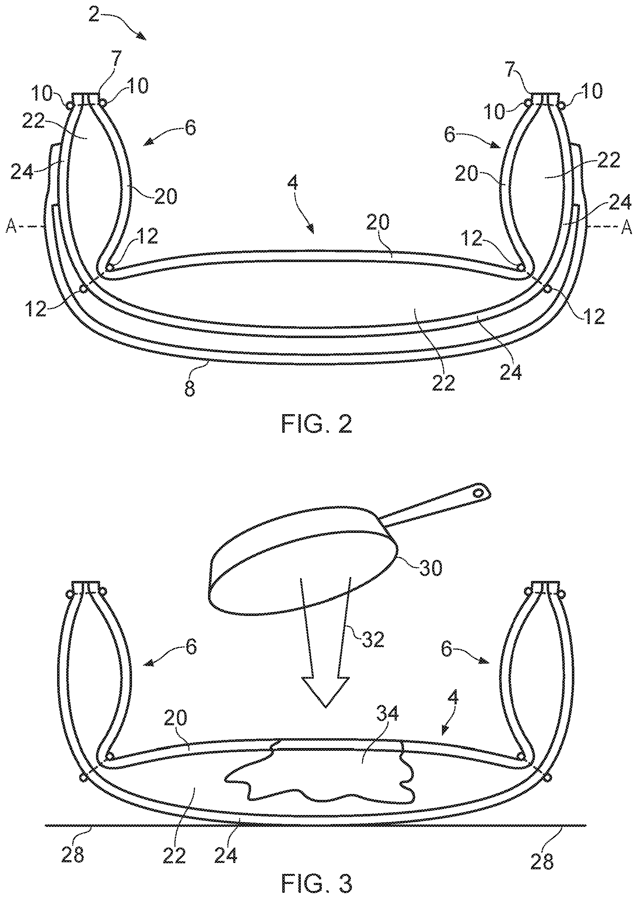

In this embodiment, the base portion 4 and the side wall 6 are made of a single piece of a multi-layered material, which is described in more detail later below with reference to Figure 2.

The handle 8 is an elongate, flexible member having a first end, a second end opposite to the first end, and an intermediate portion disposed between the first end and the second end. The first end of the handle 8 is attached to the side wall 6 at a first side of the receptacle 2. The second end of the handle 8 is attached to the side wall 6 at a second side of the receptacle 2 opposite to the first side of the receptacle 2. When the receptacle 2 is in its first configuration, as in Figure 1, the intermediate portion of the handle 8 passes from the first side of the receptacle 2, beneath the base portion 4, to the second side of the receptacle 2. The intermediate portion of the handle 8 is not attached to the base portion 4 or side wall 6 such that the intermediate portion of the handle 8 may be moved away from the base portion 4 and/or the side wall 6.

The first line of stitches 10 is located at or proximate to the opening 7 of the receptacle at the second end of the side wall 6. The first line of stitches 10 forms a loop of stitches surrounding the opening 7 of the receptacle 2. The first line of stitches 10 comprises a plurality of stitches through the entirety of the multi-layered material of the side wall 6. The first line of stitches 10 is formed from a thread or yarn travelling back and forth through the multi-layered material of the side wall 6. In this embodiment, the thread or yarn that forms the first line of stitches 10 is an elastic material, for example rubber or a woven elastic material. The loop defined by the first line of stitches 10 is substantially circular, having an unexpanded diameter substantially equal to a diameter of the substantially circular base portion 4. The elasticity of the material that forms the first line of stitches 10 allows for the diameter of the loop defined by the first line of stitches 10 to be expanded, for example by a user as described in more detail later below. The elasticity of the material that forms the first line of stitches 10 provides that, after expansion of the diameter of the loop defined by the first line of stitches 10 and removal of the expanding force, the first line of stitches returns under its own volition to its original size and shape.

The second line of stitches 12 is located at the first end of the side wall 6. The second line of stitches 12 defines a boundary between the base portion 4 and the side wall 6. The second line of stitches 12 forms a loop of stitches surrounding the base portion 4. The second line of stitches 12 comprises a plurality of stitches through the entirety of the multi-layered material from which the base portion 4 and the ide wall 6 are formed, at the boundary between the base portion 4 and the side wall 6. The second line of stitches 12 is formed from a thread or yarn travelling back and forth through the multi-layered material that forms the base portion 4 and the side wall 6. In this embodiment, the thread or yarn that forms the second line of stitches 12 is a relatively inelastic material compared to the material that forms the first line of stitches. The thread or yarn that forms the second line of stitches 12 may comprise cotton. The loop defined by the second line of stitches 12 is substantially circular, having a diameter substantially equal to a diameter of the substantially circular base portion 4.

Figure 2 is schematic illustration (not to scale) showing a cross-section through the receptacle 2 along line the A-A shown in Figure 1. Figure 2 shows the receptacle in its first configuration.

In this embodiment, the base portion 4 and the side wall 6 are made of a single piece of a multi-layered material. The multi-layered material comprises three layers, namely a first layer 20, a second layer 22, and a third layer 24.

In this embodiment the second layer 22 is sandwiched between the first layer 20 and the third layer 24.

When the receptacle 2 is in the first configuration, the first layer 20 defines a surface of the interior surface of the receptacle 2, and the third layer 24 defines a surface of the exterior of the receptacle 2.

When the receptacle 2 is in the orientation shown in Figure 2, at the base portion 4, the first layer 20 is positioned above the second layer 22, and the second layer is positioned above the third layer 24. Also, at the side wall 6, the layers 20-24 are positioned side-by-side, with the first layer 20 located at an inside surface of the side wall 6, the third layer 24 located at an outside surface of the side wall 6, and the second layer 22 positioned between the first and third layers 20, 24.

In this embodiment, the first, second, and third layers 20-24 are attached together by the first and second lines of stitches 10, 12.

The first line of stitches 10 comprises a thread or yarn travelling around the opening 7 proximate to the second end of the side wall. The thread or yarn of the first line of stitches 10 passes back and forth through the entire thickness of the multi-layered material of the side wall 6, i.e. from an external surface of the and first layer 20, an in turn through the first layer 20, through the second layer 22, and through the third layer 24, to the external surface of the third later 24, and then back in the opposite direction.

The first line of stitches 10 pulls the first layer 20 and the third layer 24 together. Thus, at the first line of stitches 10, the distance between the first and third layers 20, 24 (through the second layer 22) is less than at parts of the multi-layered material remote from a line of stitches 10, 12. Also, at the first line of stitches 10, a thickness of the multi-layered material is less than at parts of the multi-layered material remote from a line of stitches 10, 12.

In this embodiment, the first line of stitches forms a seal at the second end of the side wall 6, and may prevent or oppose the material that forms the second layer 22 being removed from the receptacle 2.

The second line of stitches 12 comprises a thread or yarn travelling around the base portion 4, between the base portion 4 and the side wall 6. The thread or yarn of the second line of stitches 12 passes back and forth through the entire thickness of the multi-layered material, i.e. from an external surface of the and first layer 20, an in turn through the first layer 20, through the second layer 22, and through the third layer 24, to the external surface of the third later 24, and then back in the opposite direction.

The second line of stitches 12 pulls the first layer 20 and the third layer 24 together. Thus, at the second line of stitches 12, the distance between the first and third layers 20, 24 (through the second layer 22) is less than at parts of the multi-layered material remote from a line of stitches 10, 12. Also, at the second line of stitches 12, a thickness of the multi-layered material is less than at parts of the multi-layered material remote from a line of stitches 10, 12.

The reduced thickness of the multi-layered material at the second line of stitches 12 (compared to at regions of the multi-layered material remote from a line of stitches 10, 12) tends to provide that, at the second line of stitches 12, the multi-layered material has reduced stiffness compared to at regions of the multi-layered material remote from a line of stitches 10, 12. In other words, the flexibility of the multi-layered material at the second line of stitches 12 is greater than the flexibility of the multi-layered material at regions of the multi-layered material remote from a line of stitches 10, 12.

Also, the thread or yarn that forms the first line of stitches 10 is an elastic material. As a result of its elasticity, when the receptacle is in its first configuration, the first line of stitches 10 acts to reduce the size of the opening 7. For example, the first line of stitches 10 acts to reduce the size of the opening 7 when the size of the opening is greater than the unexpanded size of the elastic material that forms the first line of stitches 10. Thus, the first line of stitches 10 pulls the second end of the side wall 6 inwards. This causes the multi-layered material to bend or pivot about the second line of stitches 12, thus causing the side wall 6 to be non-parallel with the base portion 4. In particular, in this embodiment, this causes the side wall 6 to extend perpendicularly from the base portion 4, substantially vertically upwards.

The multi-layered material of the base portion 4 and side wall 6 at regions remote from the line of stitches 10, 12 is relatively stiff compared to the multi-layered material at the second line of stitches 12. This advantageously provides that the base portion 4 and side wall 6 are not greatly deformed by the force exerted by the elastic first line of stitches 10, and bending of the multi-layered material tends to occur only at the second line of stitches 12. Thus, the base portion tends to remain relatively flat, with the side wall 6 extending upwards therefrom. This tends to provide for improved stability of the receptacle, which tends to be beneficial in use.

In this embodiment, the first layer 20 is a material that is permeable to liquids, including but not limited to used or spent cooking oil or fat. The first layer 20 may comprise any appropriate material such as non-woven polypropylene fabric. Preferably, the first layer 20 allows liquid to flow through it in only one direction from an external surface of the first layer 20 to the second layer 22, and not in the opposite direction (i.e. not from the second layer 22 to the external surface of the first layer 20). The first layer 20 may have uniform thickness, for example, 0.1mm-0.5mm, e.g. 0.3mm.

In this embodiment, the second layer 22 is a material that absorbs and retains liquids, including but not limited to used or spent cooking oil or fat. The second layer 22 may comprise any appropriate material such as wood pulp (which may be bleached), a super absorbent polymer (SAP), granules of acrylic acid polymer salts, oil absorbing beads, electrospun cellulose acetate nanofibers, sodium poly-acrylate, and/or natural polymers. The second layer 22 may have any appropriate thickness, and may have a maximum between, for example, 0.5mm and 2cm, e.g. 1cm-1.5cm.

In this embodiment, the third layer 24 is a material that is impermeable to liquids (and preferably impermeable also to gas), including but not limited to used or spent cooking oil or fat. The third layer 24 may comprise any appropriate material such as non-woven polythene fabric. The third layer 24 may have uniform thickness, for example, 0.1mm-0.5mm, e.g. 0.3mm.

The first end of the handle 8 is attached to the third layer 24 of the side wall 6 at a first side of the receptacle 2. The second end of the handle 8 is attached to the third layer 24 of the side wall 6 at a second side of the receptacle 2 opposite to the first side of the receptacle 2.

Figure 3 is a schematic illustration (not to scale) illustrating a first example use of the receptacle 2. The handle 8 has been omitted from Figure 2 for ease of depiction. In this example, the receptacle 2 is in its first configuration.

In this example, the receptacle 2 is placed on a kitchen work surface 28 by a user (not shown). The receptacle 2 may be located close to a cooker of the user in a convenient position.

In this example, the user pours used or spent cooking oil or fat from a pan 30 into the receptacle 2, as indicated in Figure 3 by an arrow and the reference numeral 32. The used or spent cooking oil or fat 34 in the receptacle 2 travels through the first layer 20, to the second layer 22. The used or spent cooking oil or fat 34 is then absorbed by the second layer 22. The used or spent cooking oil or fat 34 is prevented from escaping through the bottom of the receptacle 2 on to the work surface 28 by the liquid-impermeable third layer 24. Thus, used or spent cooking oil or fat 34 is retained by the receptacle 2. The user may then dispose of (e.g. in a bin) the receptacle with the used or spent cooking oil or fat 34 retained therein.

Figure 4 is a schematic illustration (not to scale) illustrating a second example use of the receptacle 2. In this example, the receptacle 2 is in its first configuration.

In this example, the receptacle 2 is placed on a kitchen work surface by a user (not shown). The receptacle 2 may be located close to a cooker of the user in a convenient position.

In this example, the user rests a kitchen utensil 40 into or on the receptacle 2, such that a portion of the utensil 40 that is covered in cooking oil or fat 42 is inside the receptacle 2. The cooking oil or fat 42 drains from the utensil 40, through the first layer 20, to the second layer 22. The cooking oil or fat 42 is then absorbed by the second layer 22. The cooking oil or fat 42 is prevented from escaping through the bottom of the receptacle 2 on to the work surface 28 by the liquid-impermeable third layer 24. Thus, the cooking oil or fat 42 is retained by the receptacle 2. The user may then dispose of (e.g. in a bin) the receptacle with the waste cooking oil or fat 42 retained therein.

Advantageously, in the above described use examples, the used or spent cooking oil or fat 34, 42 is disposed of while avoiding its disposal in sewage systems and foul drains.

Also, advantageously the relatively flat base portion 4 and upwardly extending side wall tend to provide that the receptacle is stable in use. Thus, a likelihood of spillages of the used or spent cooking oil or fat 34, 42 during disposal tends to be reduced.

The side wall 6 advantageously tends to retain used or spent cooking oil or fat 34, 42 or other waste products in the event that the multilayer material of the base portion becomes saturated. The side wall 6 advantageously tends to reduce or prevent splashing of used or spent cooking oil or fat 34, 42 out of the receptacle.

The side wall 6 advantageously tends to retain solid material such as solid waste, e.g. waste tinned foodstuffs, thereby allowing for easy disposal of said waste. Furthermore, any liquid present in the waste tends to be absorbed by the multilayer material, thereby reducing the likelihood of spillage.

Advantageously, the liquid-impermeable third layer 24 tends to provide that the user does not get used or spent cooking oil or fat 34, 42 on his/her hands when the user picks up the receptacle 2 for disposal.

Figure 5 is schematic illustration (not to scale) showing a perspective view of the receptacle 2 in its second configuration.

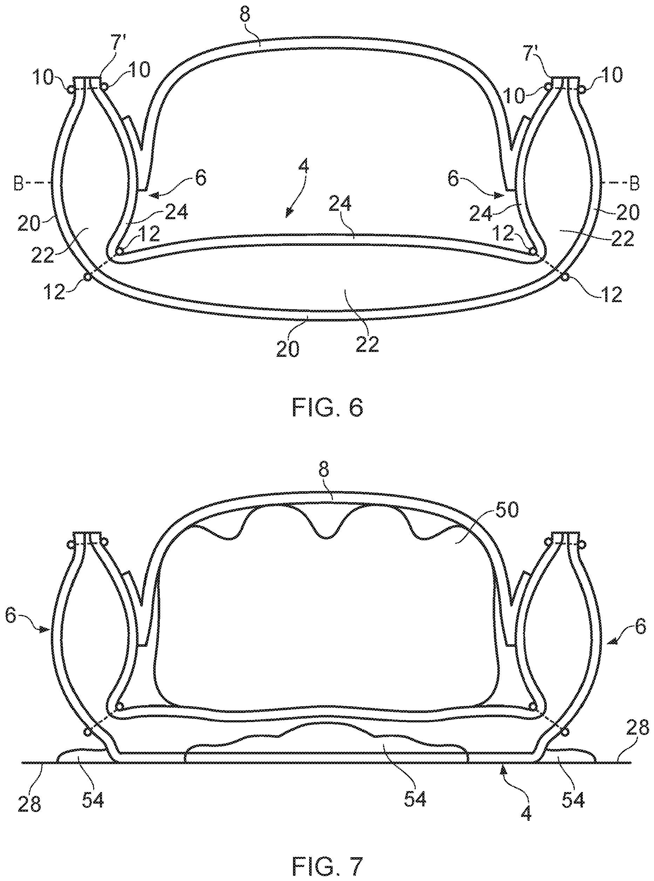

Figure 6 is schematic illustration (not to scale) showing a cross-section through the receptacle 2 along line the B-B shown in Figure 5. Figure 6 shows the receptacle 2 in its second configuration.

In this embodiment, to change the receptacle 2 from its first configuration to its second configuration or *vice versa,* the receptacle is turned "inside-out", i.e. such that the interior surface of the receptacle 2 is turned outwards to become the exterior surface of the receptacle 2 and the exterior surface of the receptacle 2 is turned inwards to become the interior surface of the receptacle 2.

In this embodiment, to change the receptacle 2 from its first configuration to its second configuration or *vice versa*, the side wall 6 is rotated about the second line of stitches 12. This may be accomplished by a user in effect pushing the base portion 4 upwards, through the opening 7. The multi-layered material being relatively thin along the second line of stitches 12 advantageously tends to facilitate this action.

In this embodiment, when the receptacle 2 is in the first configuration, the side wall 6 extends from the base portion 4 in a first direction. When the receptacle 2 is in the second configuration, the side wall 6 extends from the base portion 4 in a second direction opposite to the first direction.

When the receptacle 2 is in the second configuration, the side wall 6 extends from its first end at the edge of the base portion 4, to its second end. The second end of the side wall 6 defines an opening to a receptacle interior, which opening is indicated in Figures 5 and 6 by the reference symbol 7'.

When the receptacle 2 is in the second configuration, the first layer 20 defines a surface of the exterior surface of the receptacle 2, and the third layer 24 defines a surface of the interior of the receptacle 2.

When the receptacle 2 is in the orientation shown in Figure 6, at the base portion 4, the third layer 24 is positioned above the second layer 22, and the second layer is positioned above the first layer 20. Also, at the side wall 6, the layers 20-24 are positioned side-by-side, with the first layer 20 located at an outside surface of the side wall 6, the third layer 24 located at an inside surface of the side wall 6, and the second layer 22 positioned between the first and third layers 20, 24.

When the receptacle 2 is in its second configuration, as in Figures 5 and 6, the first end of the handle 8 is attached to the third layer 24 of the side wall 6 at a first interior side of the receptacle 2. The second end of the handle 8 is attached to the third layer 24 of the side wall 6 at a second interior side of the receptacle 2 opposite to the first interior side of the receptacle 2. Also, the intermediate portion of the handle 8 passes from the first side of the receptacle 2, across the opening 7' of the receptacle 2, to the second side of the receptacle 2. The intermediate portion of the handle 8 is spaced apart from the multi-layered material, such that an object (e.g. a user's hand) may be inserted between the handle 8 and the multi-layered material.

Figure 7 is a schematic illustration (not to scale) illustrating a third example use of the receptacle 2. In this example, the receptacle 2 is in its second configuration.

In this example, the user place his/her hand 50 between the handle 8 and the multi-layered material. In this way, the receptacle 2 is removably attached to the user's hand 50. The user then uses the receptacle 2 to wipe spillages of fluids 54 (e.g. used or spent cooking oil or fat) from the work surface 28. In particular, in this example, the user positions the receptacle 2 onto the surface 28 such that the first layer 20 is in contact with the surface 28. As the user moves the receptacle 20 across the surface 28, the cooking oil or fat 54 on the surface 28 moves through the first layer 20, to the second layer 22. The cooking oil or fat 54 is then absorbed by the second layer 22. The cooking oil or fat 54 may be prevented from passing back onto the surface 28 by the first layer 20. The cooking oil or fat 54 is prevented from travelling onto the user's hand 50 by the liquid-impermeable third layer 24. Thus, the cooking oil or fat 54 is retained by the receptacle 2. The user may then dispose of (e.g. in a bin) the receptacle 2 with the waste cooking oil or fat 54 retained therein.

Advantageously, in the above described third use example, the used or spent cooking oil or fat 54 is disposed of while avoiding its disposal in sewage systems and foul drains.

Also, advantageously the upwardly extending side wall 6 tends to prevent the cooking oil or fat 54 splashing onto the user's hand 50.

Advantageously, in addition to facilitating the holding or retaining of the receptacle 2 by the user, the handle 8 provides an indication of which configuration the receptacle 2 is in. For example, if the handle extends across the opening of the receptacle 2, the user may easily see that the receptacle is in its second configuration, whereas if the handle extends underneath the multi-layered material, the user may easily see that the receptacle 2 is in its first configuration. Nevertheless, in some embodiments, the receptacle may include one or more different indictors for the configuration of the receptacle instead of or in addition to the handle. For example, different sides of the receptacle may be differently coloured and/or patterned, e.g. the first and third layers may be differently coloured and/or patterned.

Preferably the multi-layered material is biodegradable. Preferably the material which forms one or both of the lines of stitches 10, 12 is biodegradable.

Preferably the multi-layered material is fire retardant.

In some embodiments, the multi-layered material comprises a deodorising agent. This advantageously tends to reduce odours associated with fluids added to the receptacle 2. For example, a deodorising agent may be embedded in the second layer 22.

In some embodiments, the multi-layered material comprises an agent for breaking down fats. Thus, advantageously, used or spent cooking oil or fat may be broken down when it is added to the receptacle 2. For example, an agent for breaking down fats may be embedded in the second layer 22.

In some embodiments, the multi-layered material comprises an anti-bacterial agent. This advantageously tends to reduce or eliminate bacterial growth in fluids added to the receptacle 2. For example, an anti-bacterial agent may be embedded in the second layer 22.

Preferably, the multilayer material is heat resistant. Thus, damage to a surface upon which the receptacle 2 is place tends to be prevents when hot used or spent cooking oil or fat is added to the receptacle 2. Also, a user may place hot pans or cooking utensils in or on the receptacle 2, thereby reducing or eliminating damage to a work surface caused by heat. Also, this tends to provide that a likelihood of injury to a user is reduced, for example when the user picks up the receptacle containing used or spent cooking oil or fat for disposal. Also, the receptacle is made of relatively soft materials. Thus, the receptacle 2 tends provide a cushion between pans or cooking utensils placed in or on the receptacle 2 and a work surface, thereby preventing scratches etc. to the work surface.

Advantageously, the above described receptacle is low cost, easy to package (e.g. compressible and/or may be flat-packed), and convenient to use.

In the above embodiments, the multi-layered material comprises three layers. However, in other embodiments, the multi-layered material comprises only a liquid absorbing layer and a liquid impermeable layer, i.e. in some embodiments, the first layer is omitted.

In the above embodiments, the dimensions of the receptacle are as described in more detail earlier above. However, in other embodiments, one or more of the dimensions of the receptacle is a different value to that presented above.

In the above embodiments, the receptacle is generally cylindrical. However, in other embodiments, the receptacle is a different shape.

In the above embodiments, the receptacle comprises a handle. However, in other embodiments, the handle is omitted, or a different type of handle is included.

In the above embodiments, the first line of stitches is formed from an elastic material. However, in other embodiments, the first line of stitches is formed from an inelastic material. In some embodiments, the first line of stitches may be omitted, and may be replaced by a different type of seal, such as staples or a heat seal.

In the above embodiments, the second line of stitches is formed from an inelastic material. However, in other embodiments, the second line of stitches is formed from an elastic material. In some embodiments, the second line of stitches may be omitted, and may be replaced by a different structure that provides increased flexibility (i.e. reduced stiffness) between the side wall and the base portion. For example, in some embodiments, the first and second layers are omitted at the boundary between the side wall and the base portion. In some embodiments, staples are used at the boundary between the side wall and the base portion to reduce the thickness (and thereby the stiffness) of the multi-layered material along that boundary.

In some embodiments, two or more of the first, second, and third layers are attached together in a different appropriate way instead of or in addition to by the first and second lines of stitches. For example, in some embodiments, the layers are adhered together by an adhesive.

In some embodiments, the receptacle comprises means for closing the opening of the receptacle. The means for closing the opening may be configured to allow the opening to be closed when the receptacle is in either or both of its first and second configurations. Examples of means for closing the opening of the receptacle include, but are not limited to, a drawstring, sealing tapes, and/or Velcro™. For example, the receptacle may comprise a drawstring at or proximate to the opening of the receptacle. The drawstring may be a string that surrounds the opening, adapted to be pulled by a user to tighten or close the opening. In some embodiments, the material that form the first line of stitches is a drawstring of the receptacle.

## Claims

1. A receptacle (2) for spent cooking oil or fat, the receptacle comprising:
a base portion (4); and
a side wall (6) coupled to the base portion (2) at a boundary between the base portion (4) and the side wall (6); wherein
the base portion (4) comprises a liquid absorbent layer (22) for absorbing spent cooking oil or fat, and a liquid impermeable layer (24);
the liquid absorbent layer is disposed on the liquid impermeable layer; and
a stiffness of the receptacle at the boundary between the base portion (4) and the side wall (6) is less than a stiffness of at least part of the side wall (6) remote from the boundary (10) and/or a stiffness of at least part of the base portion (4) remote from the boundary (10).

2. The receptacle according to claim 1, wherein:
the receptacle (2) is changeable between a first configuration and a second configuration;
in the first configuration, the liquid impermeable layer (24) defines at least part of an exterior surface of the receptacle (2); and
in the second configuration, the liquid impermeable layer (24) defines at least part of an interior surface of the receptacle (2).

3. The receptacle (2) according to claim 1 or claim 2, wherein:
the receptacle (2) is changeable between a first configuration and a second configuration;
in the first configuration, the side wall (6) extends from the base portion (4) in a first direction; and
in the second configuration, the side wall (6) extends from the base portion (4) in a second direction, the second direction being opposite to the first direction.

4. The receptacle (2) according to any of claims 1 to 3, wherein:
the side wall (6) is coupled to the base portion (4) at a first end of the side wall (6);
a second end of the side wall (6) opposite to the first end of the side wall (6) defines an opening (7) of the receptacle (2);
the receptacle (2) further comprises an elastic material surrounding at least part of the opening (7); and
the elastic material exerts a force on the side wall (6) acting to reduce a diameter of the opening (7).

5. The receptacle (2) according to any of claims 1 to 4, wherein:
the receptacle (2) further comprises a first fastening means at or proximate to the opening (7);
the first fastening means passes through an entirety of a thickness of the side wall (6) at the boundary ; and
the first fastening means is arranged to force interior and exterior side of the side wall (6) towards each other.

6. The receptacle (2) according to any of claims 1 to 5, wherein a thickness of the receptacle (7) at the boundary is less than a thickness of at least part of the side wall (6) remote from the boundary.

7. The receptacle (2) according to any of claims 1 to 6, wherein a thickness of the receptacle (2) at the boundary is less than a thickness of at least part of the base portion (4) remote from the boundary.

8. The receptacle (2) according to any of claims 1 to 7, wherein:
the receptacle (2) further comprises a second fastening means at or proximate to the boundary between the base portion (4) and the side wall (6);
the second fastening means passes through an entirety of a thickness of the receptacle at the boundary;
the second fastening means is arranged to force opposite sides of the receptacle (2) towards each other; and
the second fastening means comprises a fastening means selected from the group of fastening means consisting of a thread or yarn arranged as a line of stitches, and one or more staples.

9. The receptacle (2) according to any of claims 1 to 8, wherein the side wall (6) comprises a further liquid impermeable layer (24).

10. The receptacle according to any of claims 1 to 9, wherein
the side wall (6) comprises the liquid absorbent layer (22), and the liquid impermeable layer (24) disposed on the liquid absorbent layer (22);
the side wall (6) further comprises a liquid permeable layer (20); and
the liquid permeable layer (20) is disposed on the liquid absorbent layer (22) of the side wall (6) such that the liquid absorbent layer (22) of the side wall (6) is sandwiched between the liquid impermeable layer (24) of the side wall and the liquid permeable layer (20) of the side wall (6).

11. The receptacle (2) according to any of claims 1 to 10, wherein:
the base portion (4) further comprises a liquid permeable layer (20);
the liquid permeable layer (20) of the base portion (4) is disposed on the liquid absorbent layer (22) of the base portion (4) such that the liquid absorbent layer (22) of the base portion (4) is sandwiched between the liquid impermeable layer (24) of the base portion (4) and the liquid permeable layer (24) of the base portion (4); and
the liquid permeable layer (20) is configured to allow the flow of liquid therethrough only in a direction towards the liquid absorbent layer (22) and not in a direction away from the liquid absorbent layer (22).

12. The receptacle (2) according to any of claims 1 to 11, wherein the receptacle (2) comprises an agent selected from the group of agents consisting of: a deodorising agent, an agent for breaking down fats, and an anti-bacterial agent.

13. A method of providing a receptacle (2) for spent cooking oil or fat, the method comprising:
providing a base portion (4); and
coupling a side wall (6) to the base portion (4) at a boundary between the base portion (4) and the side wall (6); wherein
the base portion (4) comprises a liquid absorbent layer (22) for absorbing spent cooking oil or fat, and a liquid impermeable layer (24);
the liquid absorbent layer (22) is disposed on the liquid impermeable layer (24); and
a stiffness of the receptacle (2) at the boundary between the base portion (4) and the side wall (6) is less than a stiffness of at least part of the base portion (4) remote from the boundary and/or a stiffness of at least part of the side wall (6) remote from the boundary.

14. The method according to claim 13, wherein:
the side wall (6) is coupled to the base portion (4) at a first end of the side wall (6); and
a second end of the side wall (6) opposite to the first end of the side wall (6) defines an opening (7) of the receptacle (2).

15. The method according to claim 14, further comprising:
moving the base portion (4) through the opening (7) of the receptacle (2), thereby changing the receptacle (2) from a first configuration to a second configuration or vice versa; wherein
in the first configuration, the side wall (6) extends from the base portion (4) in a first direction; and
in the second configuration, the side wall (6) extends from the base portion (4) in a second direction, the second direction being substantially opposite to the first direction.

## Patentansprüche

1. Behälter (2) für Altspeiseöl oder -fett, wobei der Behälter Folgendes umfasst:
einen Basisabschnitt (4); und
eine Seitenwand (6), die an einer Grenze zwischen dem Basisabschnitt (4) und der Seitenwand (6) mit dem Basisabschnitt (2) gekoppelt ist;
wobei der Basisabschnitt (4) eine flüssigkeitsabsorbierende Schicht (22) zum Absorbieren von Altspeiseöl oder -fett und eine flüssigkeitsundurchlässige Schicht (24) umfasst;
die flüssigkeitsabsorbierende Schicht auf der flüssigkeitsundurchlässigen Schicht angeordnet ist; und
eine Steife des Behälters an der Grenze zwischen dem Basisabschnitt (4) und der Seitenwand (6) geringer ist als eine Steife wenigstens eines Teils der Seitenwand (6), die von der Grenze (10) entfernt ist, und/oder eine Steife wenigstens eines Teils des Basisabschnitts (4), der von der Grenze (10) entfernt ist.

2. Behälter nach Anspruch 1, wobei:
der Behälter (2) zwischen einer ersten Konfiguration und einer zweiten Konfiguration veränderbar ist;
die flüssigkeitsundurchlässige Schicht (24) in der ersten Konfiguration wenigstens einen Teil einer Außenoberfläche des Behälters (2) definiert; und
die flüssigkeitsundurchlässige Schicht (24) in der zweiten Konfiguration wenigstens einen Teil einer Innenoberfläche des Behälters (2) definiert.

3. Behälter (2) nach Anspruch 1 oder 2, wobei:
der Behälter (2) zwischen einer ersten Konfiguration und einer zweiten Konfiguration veränderbar ist;
sich die Seitenwand (6) in der ersten Konfiguration von dem Basisabschnitt (4) in einer ersten Richtung erstreckt; und
sich die Seitenwand (6) in der zweiten Konfiguration von dem Basisabschnitt (4) in einer zweiten Richtung erstreckt, wobei die zweite Richtung der ersten Richtung entgegengesetzt ist.

4. Behälter (2) nach einem der Ansprüche 1 bis 3, wobei:
die Seitenwand (6) an einem ersten Ende der Seitenwand (6) mit dem Basisabschnitt (4) gekoppelt ist;
ein zweites Ende der Seitenwand (6) gegenüber dem ersten Ende der Seitenwand (6) eine Öffnung (7) des Behälters (2) definiert;
der Behälter (2) ferner ein elastisches Material, das wenigstens einen Teil der Öffnung (7) umgibt, umfasst; und
das elastische Material eine Kraft auf die Seitenwand (6) ausübt, die wirkt, um einen Durchmesser der Öffnung (7) zu verringern.

5. Behälter (2) nach einem der Ansprüche 1 bis 4, wobei:
der Behälter (2) ferner ein erstes Befestigungsmittel an oder nahe der Öffnung (7) umfasst;
das erste Befestigungsmittel an der Grenze durch eine Gesamtheit einer Dicke der Seitenwand (6) läuft; und
das erste Befestigungsmittel eingerichtet ist, um die Innen- und Außenseite der Seitenwand (6) gegeneinander zu zwingen.

6. Behälter (2) nach einem der Ansprüche 1 bis 5, wobei eine Dicke des Behälters (7) an der Grenze geringer ist als eine Dicke wenigstens eines Teils der Seitenwand (6), die von der Grenze entfernt ist.

7. Behälter (2) nach einem der Ansprüche 1 bis 6, wobei eine Dicke des Behälters (2) an der Grenze geringer ist als eine Dicke wenigstens eines Teils des Basisabschnitts (4), der von der Grenze entfernt ist.

8. Behälter (2) nach einem der Ansprüche 1 bis 7, wobei:
der Behälter (2) ferner ein zweites Befestigungsmittel an oder nahe der Grenze zwischen dem Basisabschnitt (4) und der Seitenwand (6) umfasst;
das zweite Befestigungsmittel an der Grenze durch eine Gesamtheit einer Dicke des Behälters läuft;
das zweite Befestigungsmittel eingerichtet ist, um gegenüberliegende Seiten des Behälters (2) gegeneinander zu zwingen; und
das zweite Befestigungsmittel ein Befestigungsmittel umfasst, das aus der Gruppe von Befestigungsmitteln ausgewählt ist, die aus einem Faden oder Garn, die als eine Reihe von Stichen eingerichtet sind, und einer oder mehreren Klammern besteht.

9. Behälter (2) nach einem der Ansprüche 1 bis 8, wobei die Seitenwand (6) eine weitere flüssigkeitsundurchlässige Schicht (24) umfasst.

10. Behälter nach einem der Ansprüche 1 bis 9, wobei die Seitenwand (6) die flüssigkeitsabsorbierende Schicht (22) umfasst und die flüssigkeitsundurchlässige Schicht (24) auf der flüssigkeitsabsorbierenden Schicht (22) angeordnet ist;
die Seitenwand (6) ferner eine flüssigkeitsdurchlässige Schicht (20) umfasst; und
die flüssigkeitsdurchlässige Schicht (20) auf der flüssigkeitsabsorbierenden Schicht (22) der Seitenwand (6) derart angeordnet ist, dass die flüssigkeitsabsorbierende Schicht (22) der Seitenwand (6) zwischen der flüssigkeitsundurchlässigen Schicht (24) der Seitenwand und der flüssigkeitsdurchlässigen Schicht (20) der Seitenwand (6) eingeschoben ist.

11. Behälter (2) nach einem der Ansprüche 1 bis 10, wobei:
der Basisabschnitt (4) ferner eine flüssigkeitsdurchlässige Schicht (20) umfasst;
die flüssigkeitsdurchlässige Schicht (20) des Basisabschnitts (4) auf der flüssigkeitsabsorbierenden Schicht (22) des Basisabschnitts (4) derart angeordnet ist, dass die flüssigkeitsabsorbierende Schicht (22) des Basisabschnitts (4) zwischen der flüssigkeitsundurchlässigen Schicht (24) des Basisabschnitts (4) und der flüssigkeitsdurchlässigen Schicht (24) des Basisabschnitts (4) eingeschoben ist; und
die flüssigkeitsdurchlässige Schicht (20) konfiguriert ist, um den Flüssigkeitsstrom dahindurch nur in einer Richtung zu der flüssigkeitsabsorbierenden Schicht (22) und nicht in einer Richtung weg von der flüssigkeitsabsorbierenden Schicht (22) zu ermöglichen.

12. Behälter (2) nach einem der Ansprüche 1 bis 11, wobei der Behälter (2) einen Wirkstoff umfasst, der aus der Gruppe von Wirkstoffen ausgewählt ist, die aus Folgendem besteht:
einem Desodorierungswirkstoff, einem Wirkstoff zum Zersetzen von Fetten und einem antibakteriellen Wirkstoff.

13. Verfahren zum Bereitstellen eines Behälters (2) für Altspeiseöl oder -fett, wobei das Verfahren Folgendes umfasst:
Bereitstellen eines Basisabschnitts (4); und
Koppeln einer Seitenwand (6) mit dem Basisabschnitt (4) an einer Grenze zwischen dem Basisabschnitt (4) und der Seitenwand (6);
wobei der Basisabschnitt (4) eine flüssigkeitsabsorbierende Schicht (22) zum Absorbieren von Altspeiseöl oder -fett und eine flüssigkeitsundurchlässige Schicht (24) umfasst;
die flüssigkeitsabsorbierende Schicht (22) auf der flüssigkeitsundurchlässigen Schicht (24) angeordnet ist; und
eine Steife des Behälters (2) an der Grenze zwischen dem Basisabschnitt (4) und der Seitenwand (6) geringer ist als eine Steife wenigstens eines Teils des Basisabschnitts (4), der von der Grenze entfernt ist, und/oder eine Steife wenigstens eines Teils der Seitenwand (6), die von der Grenze entfernt ist.

14. Verfahren nach Anspruch 13, wobei:
die Seitenwand (6) an einem ersten Ende der Seitenwand (6) mit dem Basisabschnitt (4) gekoppelt ist; und
ein zweites Ende der Seitenwand (6) gegenüber dem ersten Ende der Seitenwand (6) eine Öffnung (7) des Behälters (2) definiert.

15. Verfahren nach Anspruch 14, ferner Folgendes umfassend:
Bewegen des Basisabschnitts (4) durch die Öffnung (7) des Behälters (2), wobei dadurch der Behälter (2) von einer ersten Konfiguration in eine zweite Konfiguration oder umgekehrt verändert wird;
wobei sich die Seitenwand (6) in der ersten Konfiguration von dem Basisabschnitt (4) in einer ersten Richtung erstreckt; und
sich die Seitenwand (6) in der zweiten Konfiguration von dem Basisabschnitt (4) in einer zweiten Richtung erstreckt, wobei die zweite Richtung der ersten Richtung im Wesentlichen entgegengesetzt ist.

## Revendications

1. Récipient (2) pour de l'huile ou de la graisse de cuisson usagée, le récipient comprenant :
une partie de base (4) ; et
une paroi latérale (6) accouplée à la partie de base (2) au niveau d'une limite entre la partie de base (4) et la paroi latérale (6) ;
la partie de base (4) comprenant une couche absorbant les liquides (22) pour absorber de l'huile ou de la graisse de cuisson usagée et une couche imperméable aux liquides (24) ;
la couche absorbant les liquides étant disposée sur la couche imperméable aux liquides ; et
une rigidité du récipient à la limite entre la partie de base (4) et la paroi latérale (6) est inférieure à une rigidité d'au moins une partie de la paroi latérale (6) éloignée de la limite (10) et/ou à une rigidité d'au moins une partie de la partie de base (4) éloignée de la limite (10).

2. Récipient selon la revendication 1, dans lequel :
le récipient (2) est modifiable entre une première configuration et une seconde configuration ;
dans la première configuration, la couche imperméable aux liquides (24) définit au moins une partie d'une surface extérieure du récipient (2) ; et
dans la seconde configuration, la couche imperméable aux liquides (24) définit au moins une partie d'une surface intérieure du récipient (2).

3. Récipient (2) selon la revendication 1 ou la revendication 2, dans lequel :
le récipient (2) est modifiable entre une première configuration et une seconde configuration ;
dans la première configuration, la paroi latérale (6) s'étend depuis la partie de base (4) dans une première direction ; et
dans la seconde configuration, la paroi latérale (6) s'étend depuis la partie de base (4) dans une seconde direction, la seconde direction étant opposée à la première direction.

4. Récipient (2) selon l'une quelconque des revendications 1 à 3, dans lequel :
la paroi latérale (6) est accouplée à la partie de base (4) au niveau d'une première extrémité de la paroi latérale (6) ;
une seconde extrémité de la paroi latérale (6) opposée à la première extrémité de la paroi latérale (6) définit une ouverture (7) du récipient (2) ;
le récipient (2) comprend en outre un matériau élastique entourant au moins une partie de l'ouverture (7) ; et
le matériau élastique exerce sur la paroi latérale (6) une force qui réduit un diamètre de l'ouverture (7).

5. Récipient (2) selon l'une quelconque des revendications 1 à 4, dans lequel :
le récipient (2) comprend en outre un premier moyen de fixation au niveau ou à proximité de l'ouverture (7) ;
le premier moyen de fixation traverse une totalité d'une épaisseur de la paroi latérale (6) au niveau de la limite ; et
le premier moyen de fixation est agencé pour forcer les parois intérieure et extérieure de la paroi latérale (6) l'une vers l'autre.

6. Récipient (2) selon l'une quelconque des revendications 1 à 5, dans lequel une épaisseur du récipient (7) au niveau de la limite est inférieure à une épaisseur d'au moins une partie de la paroi latérale (6) éloignée de la limite.

7. Récipient (2) selon l'une quelconque des revendications 1 à 6, dans lequel une épaisseur du récipient (2) au niveau de la limite est inférieure à une épaisseur d'au moins une partie de la partie de base (4) éloignée de la limite.

8. Récipient (2) selon l'une quelconque des revendications 1 à 7, dans lequel :
le récipient (2) comprend en outre un second moyen de fixation au niveau ou à proximité de la limite entre la partie de base (4) et la paroi latérale (6) ;
le second moyen de fixation traverse une totalité d'une épaisseur du récipient à la limite ;
le second moyen de fixation est agencé pour forcer des parois opposées du récipient (2) l'une vers l'autre ; et
le second moyen de fixation comprend un moyen de fixation sélectionné dans le groupe des moyens de fixation constitué d'un filetage ou d'un fil agencé sous la forme d'une ligne de points de couture, et d'une ou plusieurs agrafes.

9. Récipient (2) selon l'une quelconque des revendications 1 à 8, dans lequel la paroi latérale (6) comprend une autre couche imperméable aux liquides (24).

10. Récipient selon l'une quelconque des revendications 1 à 9, dans lequel la paroi latérale (6) comprend la couche absorbant les liquides (22) et la couche imperméable aux liquides (24) disposée sur la couche absorbant les liquides (22) ;
la paroi latérale (6) comprend en outre une couche perméable aux liquides (20) ; et
la couche perméable aux liquides (20) est disposée sur la couche absorbant les liquides (22) de la paroi latérale (6) de telle sorte que la couche absorbant les liquides (22) de la paroi latérale (6) est intercalée entre la couche imperméable aux liquides (24) de la paroi latérale et la couche perméable aux liquides (20) de la paroi latérale (6).

11. Récipient (2) selon l'une quelconque des revendications 1 à 10, dans lequel :
la partie de base (4) comprend en outre une couche perméable aux liquides (20) ;
la couche perméable aux liquides (20) de la partie de base (4) est disposée sur la couche absorbant les liquides (22) de la partie de base (4) de sorte que la couche absorbant les liquides (22) de la partie de base (4) est intercalée entre la couche imperméable aux liquides (24) de la partie de base (4) et la couche perméable aux liquides (24) de la partie de base (4) ; et
la couche perméable aux liquides (20) est conçue pour permettre l'écoulement de liquide à travers elle uniquement dans une direction allant vers la couche absorbant les liquides (22) et non dans une direction opposée à la couche absorbant les liquides (22).

12. Récipient (2) selon l'une quelconque des revendications 1 à 11, dans lequel le récipient (2) comprend un agent sélectionné dans le groupe d'agents constitué :
d'un agent désodorisant, d'un agent pour décomposer les graisses et d'un agent antibactérien.

13. Procédé pour fournir un récipient (2) pour de l'huile ou de la graisse de cuisson usagée, le procédé comprenant :
la mise à disposition d'une partie de base (4) ; et
l'accouplement d'une paroi latérale (6) à la partie de base (4) au niveau d'une limite entre la partie de base (4) et la paroi latérale (6) ;
la partie de base (4) comprenant une couche absorbant les liquides (22) pour absorber de l'huile ou de la graisse de cuisson usagée et une couche imperméable aux liquides (24) ;
la couche absorbant les liquides (22) étant disposée sur la couche imperméable aux liquides (24) ; et
une rigidité du récipient (2) à la limite entre la partie de base (4) et la paroi latérale (6) étant inférieure à une rigidité d'au moins une partie de la partie de base (4) éloignée de la limite et/ou à une rigidité d'au moins une partie de la paroi latérale (6) éloignée de la limite.

14. Procédé selon la revendication 13, dans lequel :
la paroi latérale (6) est accouplée à la partie de base (4) au niveau d'une première extrémité de la paroi latérale (6); et
une seconde extrémité de la paroi latérale (6) opposée à la première extrémité de la paroi latérale (6) définit une ouverture (7) du récipient (2).

15. Procédé selon la revendication 14, comprenant en outre :
le déplacement de la partie de base (4) à travers l'ouverture (7) du récipient (2), modifiant ainsi le récipient (2) d'une première configuration à une seconde configuration ou inversement ;
dans la première configuration, la paroi latérale (6) s'étendant depuis la partie de base (4) dans une première direction ; et
dans la seconde configuration, la paroi latérale (6) s'étendant depuis la partie de base (4) dans une seconde direction, la seconde direction étant sensiblement opposée à la première direction.
